# EUROPEAN PATENT SPECIFICATION

(11) **EP 2 284 764 B1**
(45) Date of publication and mention of the grant of the patent: **14.03.2012**
(21) Application number: 10161686.0
(22) Date of filing: 30.04.2010
(51) Int. Cl.: G06K 7/10, G02B 27/00, G06T 5/00, H04N 5/232

(54) **Acquisition system for obtaining sharp barcode images despite motion**
Abbildungssystem fuer trotz Bewegung scharfe Strichcodes
Système d'acquisition pour obtenir des images de code-barres vives en dépit du mouvement

(30) Priority: 13.07.2009 US 501874
(43) Date of publication of application: 16.02.2011
(73) Proprietor: Honeywell International Inc., Morristown, NJ 07962 (US)
(72) Inventor: McCloskey, Scott, Minneapolis, MN 55408 (US)
(74) Representative: Buckley, Guy Julian

(56) References cited:
- EP-A1- 2 148 290
- US-A- 6 122 004
- US-A1- 2002 139 857
- US-A1- 2005 011 957

## Description

### Prior Art

US 2005/001 1957 discloses a system and method for decoding barcodes using a mobile device comprising a digital camera and a software to enhance the barcode image and decode barcode information.

After capturing and before decoding, the image is corrected for yaw, size, rotation and skew. Then the image is sharpened, and edge-enhanced.

US 2002/013 9857 discloses an imaging device for restoring a still image from portions thereof including the object in an image by using a movement distance of objects during an exposure time and a difference between output values of adjacent pixels, movement distance encapsulated as a number of pixels.

The basic idea of de-blurring images or bar codes using a flutter shutter is known from the article "2D Barcode localization and motion deblurring using a flutter shutter camera", in: "IEEE Workshop: Applications of Computer Vision (WACV)", pages 159 - 165, by Wei Xu and Scott McCloskey (ISBN 978-1- 4244-9496-5; EPO publication number XP 031 913 568), and "Coded exposure photography: motion deblurring using fluttered shutter", by Ramesh Raskar, Amit Agrawal and Jack Tumblin, in: "ACM Transactions on Graphics", pages 795 - 804 (ISSN 0730-0301, EPO publication number XP 002 467 982).

### Background

This invention pertains to image blur removal mechanisms. Particularly, the invention pertains to cameras and more particularly to flutter shutter cameras.

### Summary

The invention, wich is defined by the claims, concerns an optical scanner using a flutter shutter.

### Brief Description of the Drawing

Figure 1 is a diagram of that compares fluttering and traditional shutters;
Figure 2a is a diagram of a setup for flutter shutter capture of barcodes in, for example, a test scenario or an assembly line;
Figure 2b is a diagram for flutter shutter capture of a barcode using a portable handheld device;
Figures 3a, 3b and 3c are images of various patterns taken with a traditional shutter and flutter shutter with corresponding de-blurred images, and reference images;
Figure 4 is a table of error and contrast measurements of the various patterns taken with a traditional shutter and flutter shutter with corresponding de-blurred images;
Figure 5a shows captured and processed barcode images for a traditional shutter;
Figure 5b shows captured and processed barcode images for a flutter shutter;
Figure 5c shows a reference still image of the barcode referred to in Figures 5a and 5b;
Figure 6 is a diagram of a high-level flow chart of operations depicting logical operational steps of an approach for simulating a fluttering shutter from video data;
Figure 7 is a diagram of a high-level flow chart of operations depicting logical operational steps of an optimization approach for finding a shutter fluttering pattern that has several desired properties; and
Figure 8 illustrates a high-level flow chart of operations depicting logical operational steps of an approach for determining a shutter fluttering sequence.

### Description

Image-based scanning of 2D barcodes is a growing area of application in many fields. Like most applications based on image sensing, the performance of the barcode reading system depends, in large part, on the quality of the acquired imagery. There are several tradeoffs that may be employed to optimize one aspect of image quality (optical blur, noise levels, motion blur, image resolution) at the expense of the other aspects. For virtually any image-based application, there are bounds outside of which useful imagery cannot be acquired. Broadly speaking, these bounds are related to the amount of illumination, the distance to the object being imaged, and the speed at which the object or camera moves during capture. Because of the above-mentioned tradeoffs, the increased tolerance to any of these three factors may be traded against in order to improve different aspects of image quality.

The present approach increases the applicability of image-based scanning of 2D barcodes by enabling the acquisition of high-quality imagery despite motion of either the camera or the printed barcode. Motion may arise in several applications of 2D barcode reading. When acquired from a hand-held device, for instance, movement of the operator's hand may reduce image sharpness due to motion blur. In a shipping distribution warehouse, though the camera may be mounted at a fixed location, motion blur may arise from objects moving along a conveyor belt.

The present approach enables the capture of high-quality 2D barcode imagery by acquiring an image using multiple-exposures in such a way that the appearance of a moving object/scene may be invertibly encoded at the spatial frequencies relevant to barcode recognition. The image, which contains the encoded appearance of the object, may be decoded by a non-traditional motion de-blurring approach based on the encoding scheme. Relative to the related art in blind deconvolution and traditional image processing, the present approach differs in that it uses multiple-exposure imagery and a co-designed de-blurring approach.

Relative to these factors, the present approach has two significant features. First, the exposure sequence used to capture the motion-encoded image may be chosen in such a way as to preserve only those spatial frequencies which are relevant to the recognition of the 2D barcode in question. This sequence may be chosen based on one or more of several criteria, including distance to the barcode, barcode type, and motion of the camera/barcode.

Second, the blur estimation step, which must be completed before decoding the moving object's appearance, may be performed with the assistance of barcode landmarks. Individual 2D barcode symbologies may have different start and stop patterns, or patterns that aid in localization and orientation. Given that such image features may be known to exist in the image, the blur estimation step can be performed by measuring the deformations of these patterns.

The present approach may have three main components. One may be pre-capture. One may compute a set of exposure sequences that can be used to optimally capture imagery at a certain distance, with a certain velocity, given a certain quantity of light, and for a specific set of critical spatial frequencies. Given (potentially incomplete) observations of these criteria, one may select the appropriate sequence for the given situation.

Another component may be capture. The chosen sequence may be used to modulate the exposure of the image sensor, and produce coded motion image. Still another component may be post-capture. The acquired image may be analyzed and processed. The analysis, as mentioned above, may determine the magnitude of motion blur in the image using a feature-based approach. The relevant barcode features, such as a start pattern, may be analyzed in the blurred image in order to estimate the blur extent. In addition, the exposure sequence used during the capture step may be provided in order to perform the blur estimation. Based on the blur estimate, the captured image may be processed in order to produce a sharp image of the barcode. Because the processing step is often sensitive to errors in the blur estimation, one may produce several deblurred images using different estimates. Out of this set of de-blurred images, one may select the one with the highest image quality using the barcode landmarks. This final image may then be sent to the barcode matching module.

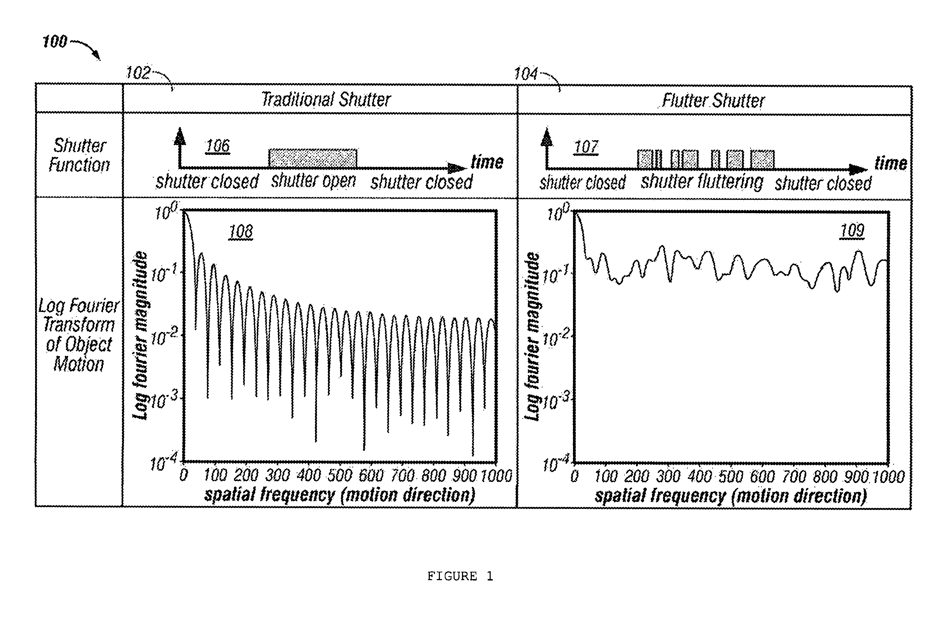

Figure 1 is a diagram 100 that compares fluttering and traditional shutters. In order to properly motivate the use of a fluttering shutter, one may briefly review the image quality implications of motion blur as seen through a traditional open/closed shutter. In diagram 100, a column 102 includes data related to the use of a traditional shutter and column 104 illustrates data related to the use of a flutter shutter. A graph 106 depicts shutter timing with respect to the use of a traditional shutter. In column 104, a graph 107 illustrates shutter timing with respect to the use of a flutter shutter. A graph 108 is also illustrated in Figure 1 with respect to column 102, while a graph 109 is depicted with respect to column 104. Graphs 108 and 109 illustrate data indicative of a log Fourier transform of the blur arising from object motion.

Column 102 of Figure 1 illustrates the timing of a traditional shutter, along with the Fourier transform of the 1D blur in the direction of motion as depicted in graph 108. The Fourier transform data depicted in graph 108 shows that contrast is significantly muted at the middle and high spatial frequencies, and goes to zero at a number of spatial frequencies (the valleys in the Fourier transform). These spatial frequencies are lost when captured through a traditional shutter and post-processing the image cannot recover that information.

In the present approach, on the other hand, one may open and close the shutter according to the chosen exposure sequence during the capture of an image. Alternatively, one may select a sequence of weights that, when applied to a sequence of video frames and combined, produces an image with the same coded blur. Either method preserves image content at all spatial frequencies and may preserve virtually all frequencies at a nearly uniform level of contrast. Thus, column 104 of Figure 1 (right column) depicts a simplified illustration of flutter shutter timing, along with the Fourier transform of motion blur associated with the shutter pattern. Comparing this to the Fourier transform associated with the traditional shutter (i.e., see graph 108), the flutter shutter (i.e., see graph 109) may preserve higher contrast at virtually all spatial frequencies and avoid lost frequencies.

There may be one-dimensional motion blur through a traditional shutter. The blur may be equivalent to convolution with a rectangle function point spread function (PSF). This blur may cancel image content at certain frequencies, such that the content cannot be recovered with post-capture image processing. Relative to traditional shutter blur, de-blurring techniques or approaches tend to significantly amplify noise.

A properly chosen flutter shutter in lieu of the traditional shutter may still produce a blurred image; however, the coded blur of the flutter shutter may carry more information. The flutter shutter may preserve spectral content at virtually all frequencies. The flutter shutter may also preserve higher contrast, requiring less amplification and thus resulting in less noise.

The present flutter shutter approach for barcode images may include the following items or steps. First, one may pre-compute the fluttering pattern to optimally preserve image content. Properties of barcode images, velocity, exposure time, blur estimation, and so forth, should be considered. Second, one may capture a flutter shutter image of a barcode moving relative to the camera. This motion may be due to the camera and/or barcode. The barcode may be on an object. Optionally, estimate velocity before capture and use the estimate to select a fluttering pattern.

Third, one may estimate motion blur from the captured flutter shutter image. The estimate may be derived from various information including knowledge of the fluttering pattern, prior knowledge of the target such as start/stop markers, appearance of active illumination, binary intensities, expected power spectrum, and so on, and outside knowledge, for example, an inertial monitoring unit.

Fourth, one may de-blur the captured flutter shutter image. Optionally, one may produce several de-blurred images to cover the error range of the blur estimation. Fifth, one may decode the de-blurred barcode image or images.

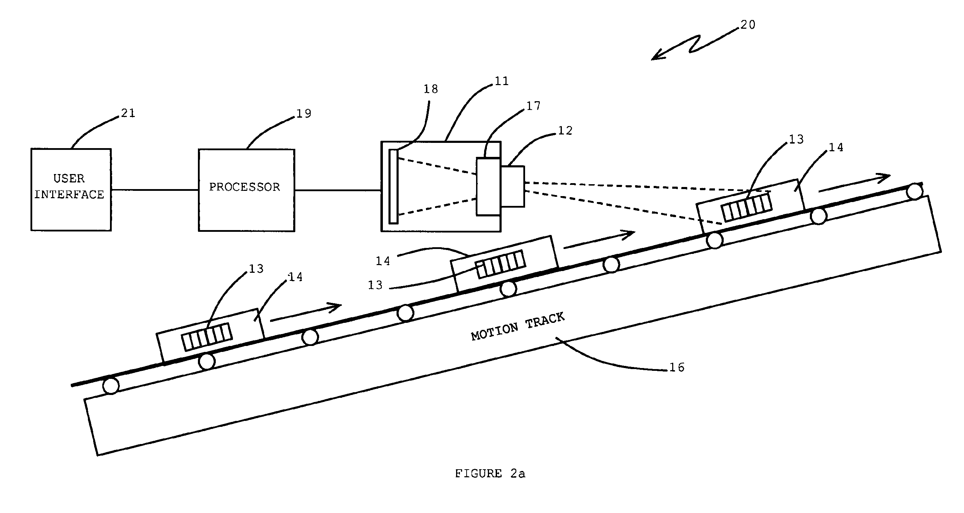

A setup 20 for flutter shutter capture of moving barcodes is shown in Figure 2a, which may used to evaluate the invention during reduction to practice, or it could be similar to an assembly line set-up. A camera 11 may have a lens 12 focused so as to capture barcode labels 13 on passing objects 14 on a motion track 16. Proximate to lens 12 may be a flutter shutter 17 which permits an image of barcode 13 to be presented on a photosensitive image array 18. Flutter shutter 17 may be connected to a processor 19 for control. Array 18 may be connected to processor 19 for conveyance of a flutter shuttered image of the barcode 13 to processor 19 for processing and conveyance. A user interface 21 may be connected to processor 19 for monitoring and control of the barcode acquisition system setup 20.

Setup 20 may, for instance, have the motion track 16 provide a horizontal (lateral) motion to the objects 14 with the barcodes 13 at a speed of about 0.5 m/sec. relative to the camera 11. The exposure time of the shutter 17 may be about 4ms. The distance between camera 11 and the target (i.e., a barcode currently being captured) may be about 0.45 m. Camera 11 may be a Point Grey Flea2^{™} camera (using IEEE DCAM v1.31 mode 5). The resolution of the images may be about 800x600 (where the images are cropped for presentation). The frame rate of the camera 11 may be about 15 frames per second. Examples of the targets 13 may include a 3.5 cm square Aztec^{™}, a 3.5 cm square Data Matrix^{™}, and a 5 cm long edge PDF417^{™}. The parameters of setup 20 may have other values.

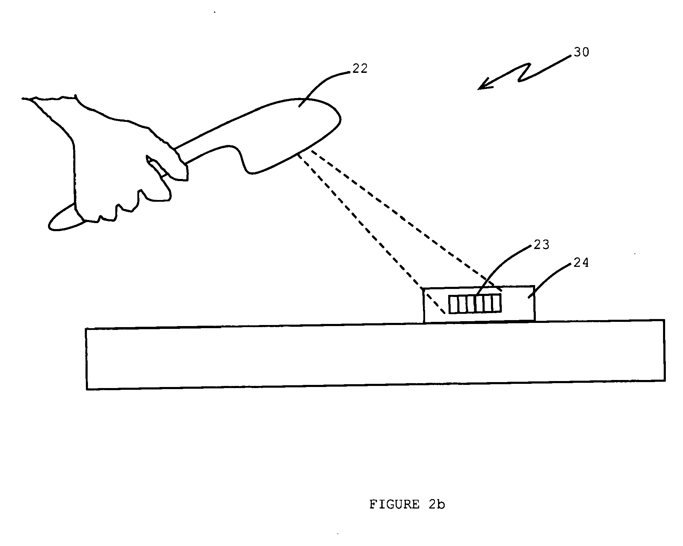

Figure 2b is a diagram of a setup 30 which may be utilized in a grocery store check-out, a security point at a facility, a manufacturing area, or other application. Setup 30 shows flutter shutter capture of a barcode 23 on an item 24 using a portable handheld device 22. Either barcode 23 or capture device 22 or both may have movement resulting in blur.

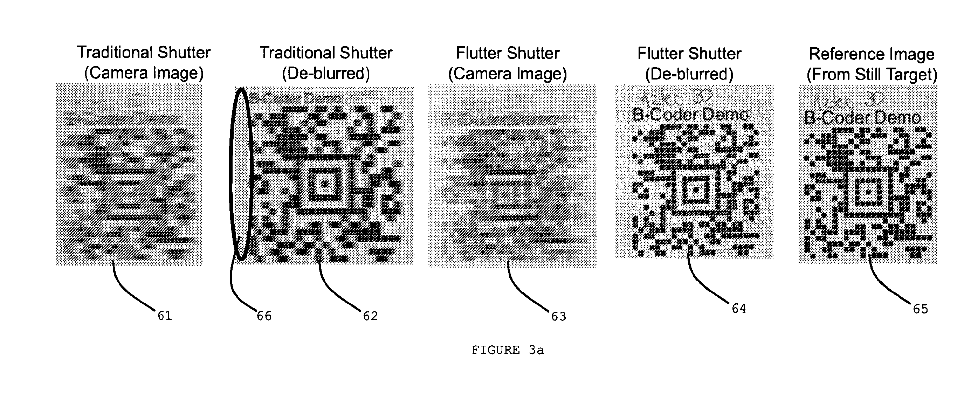

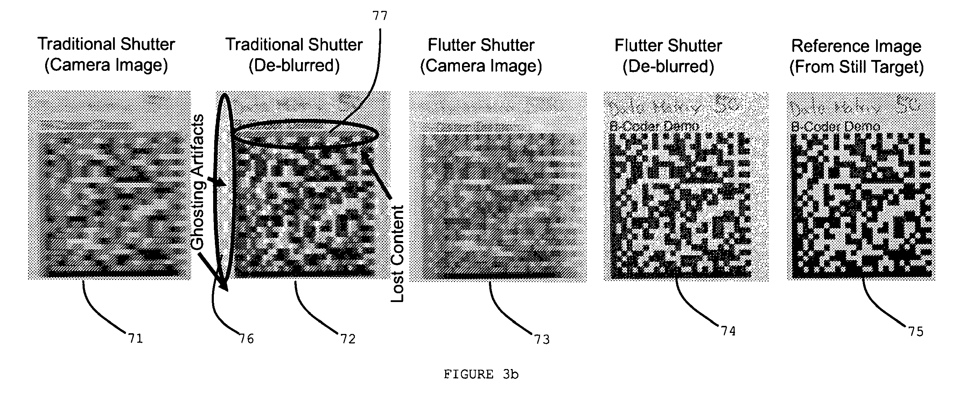

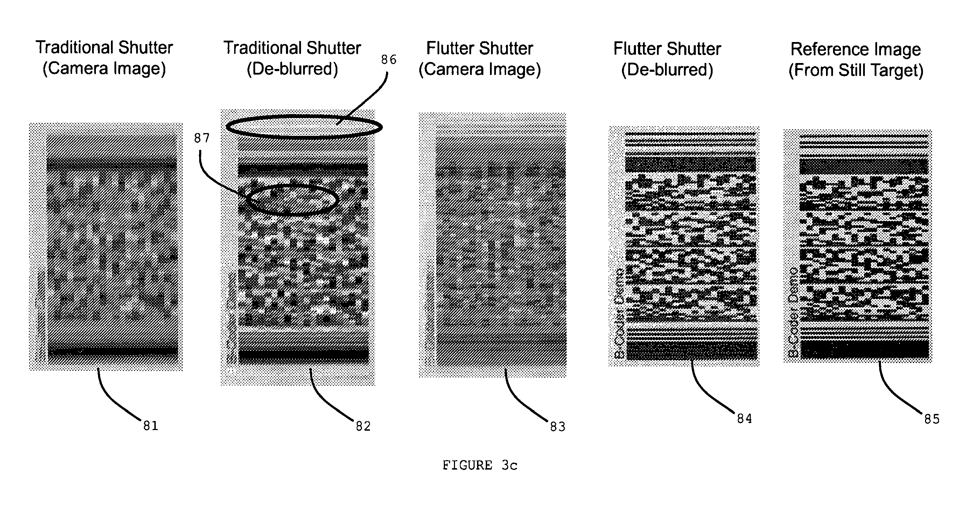

Figures 3a, 3b and 3c show examples of results of barcode capture with an arrangement, for example, like that of setup 20 or 30. Figure 3a shows images 61-65 of the Aztec^{™} target. Image 61 is an image from a camera with a traditional shutter. Image 62 is a de-blurred image 61. Image 63 is an image from a camera with a flutter shutter. Image 64 is a de-blurred image 63. Image 65 is a reference image from a still target. Image 62 has ghosting artifacts 66.

Figure 3b shows images 71-75 of the Data Matrix^{™} target. Image 71 is an image from a camera with a traditional shutter. Image 72 is a de-blurred image 71. Image 73 is an image from a camera with a flutter shutter. Image 74 is a de-blurred image 73. Image 75 is a reference image from a still target. Image 72 has ghosting artifacts 76 and lost content 77.

Figure 3c shows images 81-85 of the PDF417^{™} target. Image 81 is an image from a camera with a traditional shutter. Image 82 is a de-blurred image 81. Image 83 is an image from a camera with a flutter shutter. Image 84 is a de-blurred image 83. Image 85 is a reference image from a still target. Image 82 has ghosting artifacts 86 and lost content 87.

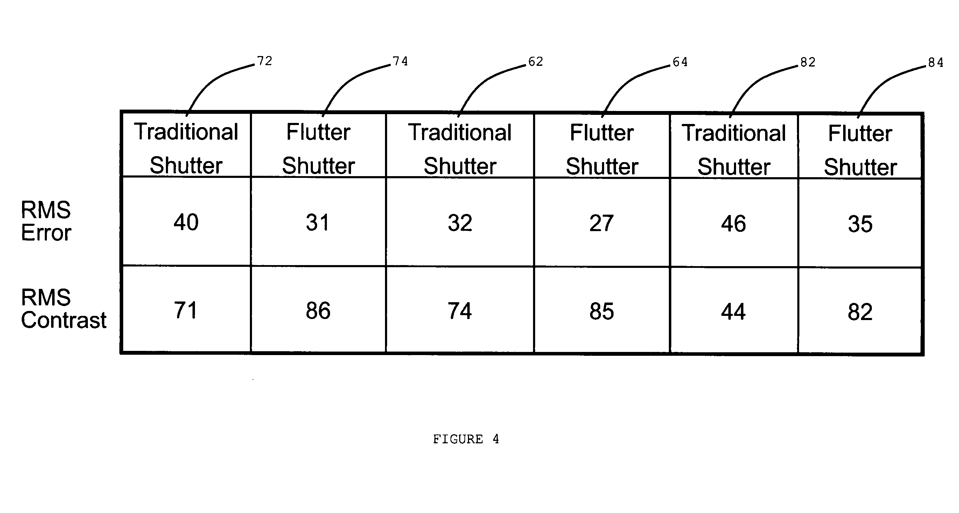

Figure 4 shows a comparison table for the de-blurred images 62 and 64, 72 and 74, and 82 and 84, for traditional shutter and flutter shutter for the Aztec^{™} target, Data Matrix^{™} target and PDF417^{™} target, respectively, in terms of RMS error and RMS contrast.
For the Aztec^{™} target, the RMS error is 32 for the traditional shutter and 27 for the flutter shutter with about 16 percent improvement for the flutter shutter.
For the same target, the RMS contrast is 74 for the traditional shutter and 85 for the flutter shutter with about a 15 percent improvement for the flutter shutter.

For the Data Matrix^{™} target, the RMS error is 40 for the traditional shutter and 31 for the flutter shutter with about a 22.5 percent improvement for the flutter shutter. For the same target, the RMS contrast is 71 for the traditional shutter and 86 for the flutter shutter with about a 21 percent improvement for the flutter shutter.

For the PDF417^{™} target, the RMS error is 46 for the traditional shutter and 35 for the flutter shutter with about a 24 percent improvement for flutter shutter. For the same target, the RMS contrast is 44 for the traditional shutter and 82 for the flutter shutter, with a about an 86 percent improvement for the flutter shutter.

The average improvement in RMS error for the three noted targets is about 21 percent in favor of the flutter shutter. The average improvement in RMS contrast for the three targets is about 41 percent in favor of the flutter shutter. The overall average improvement in RMS error and contrast is about 31 percent in favor of the flutter shutter.

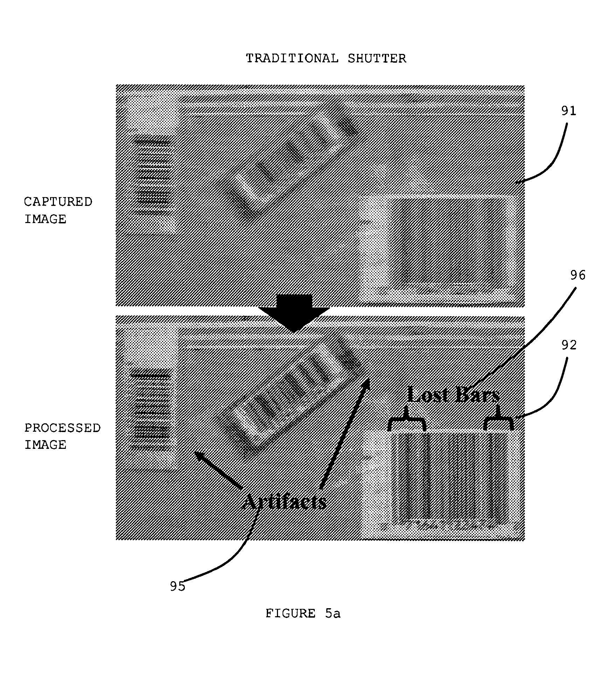

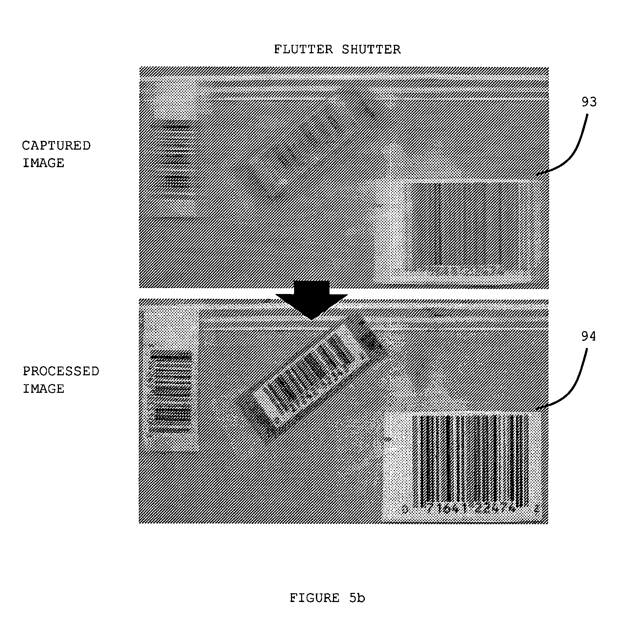

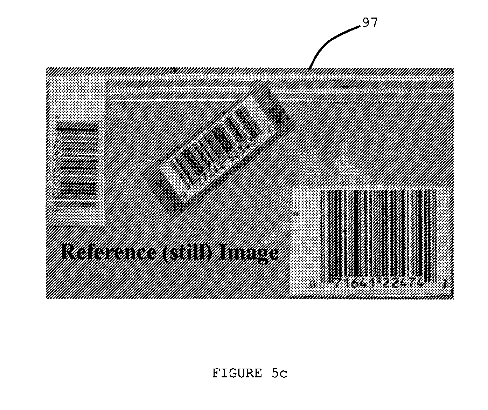

Figure 5a shows a captured image 91 and the processed image 92 of a barcode for a camera with a traditional shutter. Figure 5b shows a captured image 93 and the processed image 94 of a barcode for a camera with a flutter shutter. Artifacts 95 and lost bars 96 in the processed image 92 may be noted. The processed image 94 of the flutter shutter shows the barcode in much better detail than the processed image 92. Figure 5c shows a reference image 97 of a still barcode. The images were captured with setup 20 shown in Figure 2.

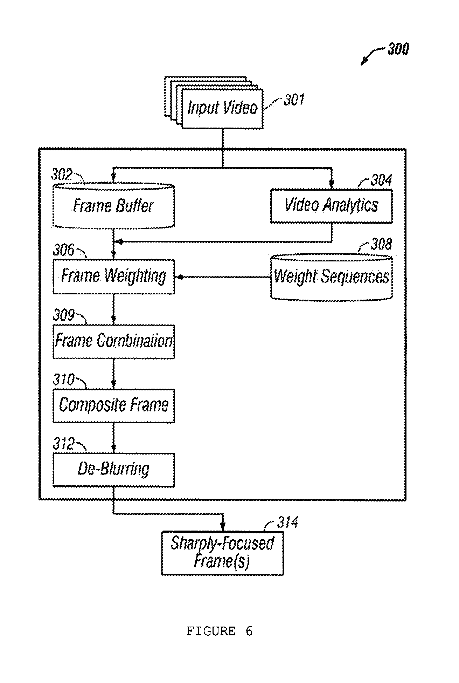

Figure 6 illustrates a high-level flow chart of operations depicting logical operational steps of an approach 300 for simulating a fluttering shutter from video data. Approach 300 involves the generation and deblurring of composite images formed by adding a sequence of video frames, each scaled according to a sequence of weights. As indicated at block 301, video images may be provided. The operation described at block 301 generally involves capturing video frames using a standard camera. Next, as indicated at block 302, a frame buffer may be implemented to store a selection of recent video images provided via the operation illustrated at block 301. An operation involving video analytics, as described herein, may also be implemented, as depicted at block 304. A frame weighting operation may then be implemented as depicted at block 306, utilizing one or more weight sequences stored in a repository as indicated at block 308. The operation illustrated at block 306 generally involves scaling a subset of the captured video frames from the frame buffer (block 302) according to a sequence of weights to produce a plurality of scaled video frames thereof. The scaled video frames can then be combined at block 309 to generate one or more composite images (block 310) with coded motion blur. Thereafter, the composite image(s) may be processed at block 312 to produce a sharply focused image as illustrated at block 314.

Thus, by selecting an appropriate sequence of weights from the repository at block 308, the effects of a fluttering shutter may be synthesized in blocks 306 and 309, with the additional flexibility of being able to use negative and non-binary amplitudes. In addition, the video analytic functions (e.g., background subtraction, tracking, and occlusion detection) provided via the operation depicted at block 304 may be used to improve the results of the de-blurring. In particular, the use of background-subtracted frames in generating the composite image, as indicated at block 310, may assist in preventing background intensities from distorting the de-blurred image. Tracking information may be used to estimate the location and speed of moving objects in the scene, which can be used to generate a composite image with a fixed amount of motion blur. This may alleviate the need to estimate the direction and extent of motion blur from the coded image, errors in which can reduce the quality of the de-blurred image. Finally, occlusion detection may be utilized to select which frames should be combined to form the composite frame, choosing only those frames where the moving subject is visible.

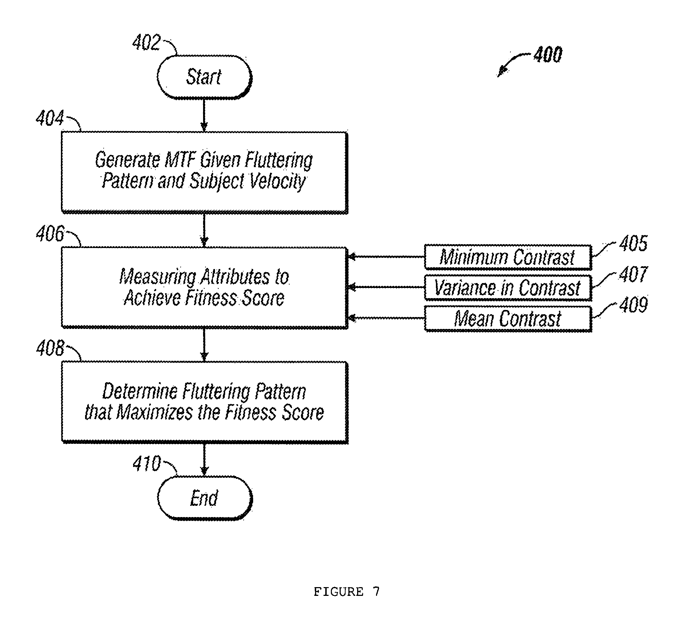

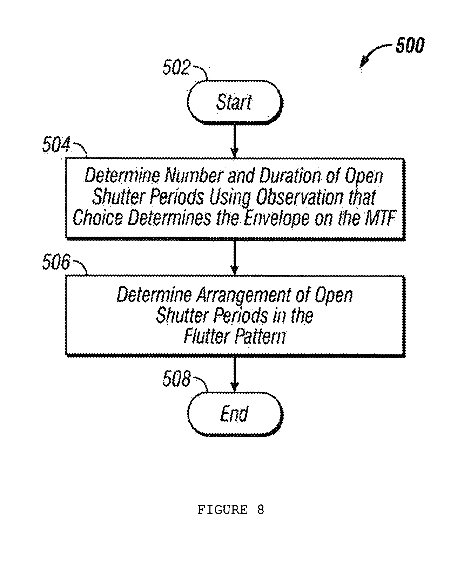

Figure 7 illustrates a high-level flow chart of operations depicting logical operational steps of an approach 400. Note that the approach 400 of Figure 7 and an approach 500 of Figure 8, and other methodologies disclosed herein, may be implemented in the context of a computer-useable medium that contains a program product.

There may be an optimization approach for finding a shutter fluttering pattern that has several desired properties. The process may begin at block 402. Such properties can be expressed in the context of a fitness function. Given a fluttering pattern and a target subject's velocity, the equivalent modulation transfer function (MTF) may be generated at bock 404. Thereafter, as depicted at block 406, an operation may be processed for measuring three attributes, and, as indicated at block 408, may produce a fitness score. The three attributes may be the minimum contrast at block 405, the variance in contrast across spatial frequencies at block 407, and the mean contrast at block 409. An objective of approach 400 is to determine the fluttering pattern that maximizes the fitness score. The process may then terminate at block 410.

Figure 8 illustrates a high-level flow chart of operations depicting logical operational steps of an approach 500 of determining a shutter fluttering sequence. Approach 500 may represents a further refinement to the general methodology of approach 400. As indicated by approach 500, the fluttering pattern may be completely specified by determining the number and duration of each open shutter period, and the start time of each such open shutter period. The approach may generally begin at block 502.

The instructions of approach 500 may perform the search for the near-optimal pattern by determining these two properties sequentially. Approach 500 may first determines the number and duration of open shutter periods using the observation that this choice determines the envelope on the MTF (i.e., an upper bound on the contrast at each spatial frequency), as indicated at block 504. Given a particular collection of open shutter periods that produces an envelope with good fitness, the second step, as indicated at block 506, may determine the arrangement of those open shutter periods in the flutter pattern. This may be achieved by creating an initial, naive arrangement, and then by modifying that arrangement in any one of a number of approaches (while preserving the validity of the sequence) that improve the fitness score. Given approaches that perform this modification, this second optimization step can be performed using a number of computational techniques. The approach may then terminate at block 508.

At a high level, the approaches 400 and 500 may receive as input two parameters which include the required exposure time (this may be the sum of the durations of the open shutter periods) and the subject velocity (measured in pixels per millisecond). Approaches 400 and 500 may incorporate hardware constraints by respecting the minimum allowable open shutter duration. The output of approaches 400 and 500 may be the fluttering pattern (for use with the camera control software), along with the equivalent MTF, point spread function (PSF), and fitness score (for analytic use).

## Claims

1. A method for barcode acquisition, comprising:
pre-computing a multiple exposure sequence of an image of a 2D barcode to preserve image content relevant to the recognition of the 2D barcode;
acquiring the image of the 2D barcode (13, 23) in accordance with the pre-computed multiple exposure sequence;
estimating blur of the image of the 2D barcode (13, 23); and
de-blurring the image of the 2D barcode (13, 23) based on the estimated blur to result in a de-blurred image of the 2D barcode.

2. The method of claim 1, further comprising decoding the de-blurred image of the 2D barcode (13, 23).

3. The method of claim 1, wherein the image of the 2D barcode (13, 23) is acquired with an image acquisition mechanism (11, 22) having a flutter shutter (17).

4. The method of claim 1, wherein:
the image of the 2D barcode (13, 23) is acquired with a video mechanism (301); and
the method further comprises synthesizing the image of the 2D barcode (13, 23) from a video of the video mechanism (301) by applying a sequence of weights to a sequence of video frames of the video and combining the frames.

5. The method of claim 1, wherein:
pre-computing the multiple exposure sequence is performed in a two step approach; and
the two step approach comprises:
determining a number and duration of open shutter periods to determine an envelope on an MTF; and
determining an arrangement of the open shutter periods in the multiple exposure sequence to optimize a fitness score.

6. The method of claim 1, wherein:
the estimating blur is effected using hardware cues; and
the hardware cues comprise an inertial monitoring unit, projected aiming light, and/or other components.

7. The method of claim 1, wherein de-blurring comprises:
producing multiple de-blurred images using different blur estimates; and
selecting one of the multiple de-blurred images having the highest image quality.

8. The method of claim 1, wherein estimating blur includes measuring deformations of landmarks of the 2D barcode in the image of the 2D barcode (13, 23).

9. The method of claim 1, wherein the multiple exposure sequence is pre-computed to preserve spatial frequencies relevant to recognition of the 2D barcode.

10. An acquisition system for obtaining sharp barcode images despite motion, comprising:
a camera (11, 22) for acquiring a multiple exposure image of a 2D barcode (13, 23); and
a processor (19) programmed to:
pre-compute a multiple exposure sequence to preserve image content relevant to the recognition of a 2D barcode, the multiple exposure sequence to be used in acquiring the multiple exposure image by the camera;
estimate blur of the multiple exposure image;
de-blur the multiple exposure image; and
decode the de-blurred image of the 2D barcode (13, 23).

11. The system of claim 10, wherein the camera (11, 22) includes a flutter shutter.

12. The system of claim 10, wherein the camera is a video camera, and the processor is further programmed to synthesize the multiple exposure image from a video captured by the camera by applying a sequence of weights to a sequence of video frames of the video and combining the frames.

13. The system of claim 10, wherein the processor is programmed to pre-compute the multiple exposure sequence in a two step approach, the two step approach comprising:
determining a number and duration of open shutter periods to determine an envelope on an MTF; and
determining an arrangement of the open shutter periods in the multiple exposure sequence to optimize a fitness score.

14. The system of claim 10, wherein the process by which the processor is programmed to estimate blur includes measuring deformations of landmarks of the 2D barcode in the multiple exposure image.

15. The system of claim 10, wherein the process by which the processor is programmed to de-blur the multiple exposure image includes producing multiple de-blurred images using different blur estimates, and selecting one of the multiple de-blurred images having the highest image quality.

## Patentansprüche

1. Verfahren für die Strichcodeerfassung, das Folgendes umfasst:
Vorberechnen einer Mehrfachbelichtungssequenz eines Bilds eines 2D-Strichcodes, um einen für die Erkennung des 2D-Strichcodes relevanten Bildinhalt aufzubewahren,
Erfassen des Bilds des 2D-Strichcodes (13, 23) gemäß der vorberechneten Mehrfachbelichtungssequenz;
Schätzen einer Unschärfe des Bilds des 2D-Strichcodes (13, 23) und
Verstärken des Kontrasts des Bilds des 2D-Strichcodes (13, 23) auf der Basis der geschätzten Unschärfe, um ein kontrastreicheres Bild des 2D-Strichcodes zu erhalten.

2. Verfahren nach Anspruch 1, weiterhin umfassend das Decodieren des kontrastverstärkten Bilds des 2D-Strichcodes (13, 23).

3. Verfahren nach Anspruch 1, wobei das Bild des 2D-Strichcodes (13, 23) mit einem Bilderfassungsmechanismus (11, 22) mit einem "Flutter"-Verschluss (17) erfasst wird.

4. Verfahren nach Anspruch 1, wobei:
das Bild des 2D-Strichcodes (13, 23) mit einem Videomechanismus (301) erfasst wird und
das Verfahren weiterhin das Synthetisieren des Bilds des 2D-Strichcodes (13, 23) aus einem Video des Videomechanismus (301) durch Anwenden einer Sequenz von Gewichten auf eine Sequenz von Video-Frames des Videos und Kombinieren der Frames umfasst.

5. Verfahren nach Anspruch 1, wobei:
das Vorberechnen der Mehrfachbelichtungssequenz in einem zweistufigen Ansatz durchgeführt wird; und
der zweistufige Ansatz Folgendes umfasst:
Bestimmen einer Anzahl und Dauer von Perioden mit offenem Verschluss, um eine Einhüllende auf einer MTF zu bestimmen; und
Bestimmen einer Anordnung der Perioden mit offenem Verschluss in der Mehrfachbelichtungssequenz, um einen Eignungspunktwert zu optimieren.

6. Verfahren nach Anspruch 1, wobei:
das Schätzen der Unschärfe unter Verwendung von Hardware-Cues bewirkt wird; und
die Hardware-Cues eine Trägheitsüberwachungseinheit, das Projizieren von Pilotlicht und/oder andere Komponenten umfassen.

7. Verfahren nach Anspruch 1, wobei die Kontrastverstärkung Folgendes umfasst:
Herstellen mehrerer kontrastverstärkter Bilder unter Verwendung unterschiedlicher Unschärfeschätzwerte; und
Wählen eines der mehreren kontrastverstärkten Bilder mit der höchsten Bildqualität.

8. Verfahren nach Anspruch 1, wobei das Schätzen einer Unschärfe das Messen von Verformungen von Landmarken des 2D-Strichcodes in dem Bild des 2D-Strichcodes (13, 23) beinhaltet.

9. Verfahren nach Anspruch 1, wobei die Mehrfachbelichtungssequenz vorberechnet wird, um Raumfrequenzen, die für die Erkennung des 2D-Strichcodes relevant sind, aufzubewahren.

10. Erfassungssystem zum Erhalten scharfer Strichcodebilder trotz Bewegung, das Folgendes umfasst:
eine Kamera (11, 22) zum Erfassen eines Mehrfachbelichtungsbilds eines 2D-Strichcodes (13, 23); und
einen Prozessor (19), der programmiert ist zum:
Vorberechnen einer Mehrfachbelichtungssequenz, um für die Erkennung eines 2D-Strichcodes relevanten Bildinhalt aufzubewahren, wobei die Mehrfachbelichtungssequenz beim Erfassen des Mehrfachbelichtungsbilds durch die Kamera verwendet werden soll;
Schätzen einer Unschärfe des Mehrfachbelichtungsbilds;
Verstärken des Kontrasts des Mehrfachbelichtungsbilds; und
Decodieren des kontrastverstärkten Bilds des 2D-Strichcodes (13, 23).

11. System nach Anspruch 10, wobei die Kamera (11, 22) einen "Flutter"-Verschluss enthält.

12. System nach Anspruch 10, wobei die Kamera eine Videokamera ist und der Prozessor weiterhin programmiert ist zum Synthetisieren des Mehrfachbelichtungsbilds aus einem von der Kamera aufgenommenen Video durch Anwenden einer Sequenz von Gewichten auf eine Sequenz von Video-Frames des Videos und Kombinieren der Frames.

13. System nach Anspruch 10, wobei der Prozessor programmiert ist zum Vorberechnen der Mehrfachbelichtungssequenz in einem zweistufigen Ansatz, wobei der zweistufige Ansatz Folgendes umfasst:
Bestimmen einer Anzahl und Dauer von Perioden mit offenem Verschluss, um eine Einhüllende auf einer MTF zu bestimmen; und
Bestimmen einer Anordnung der Perioden mit offenem Verschluss in der Mehrfachbelichtungssequenz, um einen Eignungspunktwert zu optimieren.

14. System nach Anspruch 10, wobei der Prozess, durch den der Prozessor programmiert ist, eine Unschärfe zu schätzen, das Messen von Verformungen von Landmarken des 2D-Strichcodes in dem Mehrfachbelichtungsbild beinhaltet.

15. System nach Anspruch 10, wobei der Prozess, durch den der Prozessor programmiert ist, den Kontrast des Mehrfachbelichtungsbilds zu verstärken, das Herstellen mehrerer kontrastverstärkter Bilder mit verschiedenen Unschärfeschätzwerten und Wählen eines der mehreren kontrastverstärkten Bilder mit der höchsten Bildqualität beinhaltet.

## Revendications

1. Procédé d'acquisition de codes à barres, comportant les étapes consistant à :
pré-calculer une suite d'expositions multiples d'une image d'un code à barres 2D pour préserver un contenu d'image pertinent pour la reconnaissance du code à barres 2D ;
acquérir l'image du code à barres 2D (13, 23) selon la suite d'expositions multiples pré-calculée ;
estimer le flou de l'image du code à barres 2D (13, 23) ; et
déflouter l'image du code à barres 2D (13, 23) en se basant sur le flou estimé pour donner une image défloutée du code à barres 2D.

2. Procédé selon la revendication 1, comportant en outre une étape consistant à décoder l'image défloutée du code à barres 2D (13, 23).

3. Procédé selon la revendication 1, l'image du code à barres 2D (13, 23) étant acquise à l'aide d'un mécanisme (11, 22) d'acquisition d'image doté d'un obturateur oscillant (17).

4. Procédé selon la revendication 1 :
l'image du code à barres 2D (13, 23) étant acquise à l'aide d'un mécanisme vidéo (301) ; et
le procédé comportant en outre une étape consistant à synthétiser l'image du code à barres 2D (13, 23) à partir d'une vidéo du mécanisme vidéo (301) en appliquant une suite de poids à une suite de vues vidéo de la vidéo et en combinant les vues.

5. Procédé selon la revendication 1 :
le pré-calcul de la suite d'expositions multiples étant effectué selon une approche en deux temps ; et
l'approche en deux temps comportant les étapes consistant à :
déterminer un nombre et une durée de périodes d'obturateur ouvert pour déterminer une enveloppe sur une fonction de transfert de modulation (FTM) ; et
déterminer une disposition des périodes d'obturateur ouvert dans la suite d'expositions multiples pour optimiser un score d'aptitude.

6. Procédé selon la revendication 1 :
l'estimation du flou étant effectuée à l'aide d'indices matériels ; et
les indices matériels comportant une unité de surveillance inertielle, une lumière de visée projetée et / ou d'autres composants.

7. Procédé selon la revendication 1, le défloutage comportant les étapes consistant à :
produire des images défloutées multiples en utilisant différentes estimations du flou ; et
sélectionner l'une des images défloutées multiples présentant la qualité la plus élevée.

8. Procédé selon la revendication 1, l'estimation du flou comprenant une étape consistant à mesurer des déformations de points caractéristiques du code à barres 2D dans l'image du code à barres 2D (13, 23).

9. Procédé selon la revendication 1, la suite d'expositions multiples étant pré-calculée pour préserver des fréquences spatiales pertinentes pour la reconnaissance du code à barres 2D.

10. Système d'acquisition destiné à obtenir des images nettes de codes à barres malgré un mouvement, comportant :
un appareil (11, 22) de prise de vues destiné à acquérir une image à expositions multiples d'un code à barres 2D (13, 23) ; et
un processeur (19) programmé pour :
pré-calculer une suite d'expositions multiples pour préserver un contenu d'image pertinent pour la reconnaissance d'un code à barres 2D, la suite d'expositions multiples étant appelée à être utilisée lors de l'acquisition de l'image à expositions multiples par l'appareil de prise de vues ;
estimer le flou de l'image à expositions multiples déflouter l'image expositions multiples ; et
décoder l'image défloutée du code à barres 2D (13, 23).

11. Système selon la revendication 10, l'appareil (11, 22) de prise de vues comprenant un obturateur oscillant.

12. Système selon la revendication 10, l'appareil de prise de vues étant une caméra vidéo et le processeur étant en outre programmé pour synthétiser l'image à expositions multiples à partir d'une vidéo capturée par la caméra vidéo en appliquant une suite de poids à une suite de vues vidéo de la vidéo et en combinant les vues.

13. Système selon la revendication 10, le processeur étant programmé pour pré-calculer la suite d'expositions multiples selon une approche en deux temps, l'approche en deux temps comportant les étapes consistant à :
déterminer un nombre et une durée de périodes d'obturateur ouvert pour déterminer une enveloppe sur une FTM ; et
déterminer une disposition des périodes d'obturateur ouvert dans la suite d'expositions multiples pour optimiser un score d'aptitude.

14. Système selon la revendication 10, le processus par lequel le processeur est programmé pour estimer le flou comprenant une étape consistant à mesurer des déformations de points caractéristiques du code à barres 2D dans l'image à expositions multiples.

15. Système selon la revendication 10, le processus par lequel le processeur est programmé pour déflouter l'image à expositions multiples comprenant des étapes consistant à produire des images défloutées multiples en utilisant différentes estimations du flou, et à sélectionner l'une des images défloutées multiples présentant la qualité la plus élevée.
